# EUROPEAN PATENT APPLICATION

(11) **EP 4 693 525 A1**
(43) Date of publication of application: **11.02.2026**
(21) Application number: 24779022.3
(22) Date of filing: 28.02.2024
(51) Int. Cl.: H01M 4/86, C01B 32/05, H01M 4/88, H01M 8/10

(54) **CARBON MATERIAL FOR CATALYST CARRIER OF SOLID POLYMER FUEL CELL, CATALYST LAYER FOR SOLID POLYMER FUEL CELL, FUEL CELL, AND METHOD FOR MANUFACTURING CARBON MATERIAL FOR CATALYST CARRIER OF SOLID POLYMER FUEL CELL**

(30) Priority: 31.03.2023 JP 2023058262
(71) Applicant: Nippon Steel Chemical & Material Co., Ltd., Tokyo 103-0027 (JP)
(72) Inventor: MASAKI, Kazuyoshi, Tokyo 103-0027 (JP); TADOKORO, Kenichiro, Tokyo 103-0027 (JP); DAITO, Noboru, Tokyo 103-0027 (JP); HIYOSHI, Masataka, Tokyo 100-8071 (JP)
(74) Representative: SONN Patentanwälte GmbH & Co KG
(86) International application number: PCT/JP2024/007446
(87) International publication number: WO 2024/202883

(57) **Abstract**

Provided are a carbon material for a catalyst carrier of a solid polymer fuel cell which comprise a porous carbon material satisfying the following requirements (A) to (D), a catalyst layer and a fuel cell using the same, and a method of manufacturing a carbon material for a catalyst carrier:
(A) a value of pore volume VA₅₋₁₀ exhibited by pores having a pore diameter of from 5 to less than 10 nm, determined from a nitrogen adsorption isotherm, is from 0.1 mL/g to less than 0.2 mL/g;
(B) a difference between pore volume VA₅₋₁₀ of pores having a pore diameter of from 5 to less than 10 nm, determined from a nitrogen adsorption isotherm, and pore volume VD₅₋₁₀ of pores having a pore diameter of from 5 to less than 10 nm, determined from a nitrogen desorption isotherm, is 0.06 mL/g or more;
(C) Lc of component A having a clear peak within 20 = 26.0 ± 0.2° in an XRD spectrum, among those obtained by waveform separation at 2θ = 20° to 30°, (LcA) is 0.9 nm or more; and
(D) a nitrogen adsorption amount V_{macro} at a relative pressure of from 0.95 to 0.99 in a nitrogen adsorption isotherm range from 300 to 1200 mL/g.

## Description

### Technical field

The present disclosure relates to a carbon material for a catalyst carrier of a solid polymer fuel cell, a catalyst layer for a solid polymer fuel cell, a fuel cell, and a method of manufacturing a carbon material for a catalyst carrier of a solid polymer fuel cell.

### Background Art

A solid polymer fuel cell, which is one type of fuel cell, includes a pair of catalyst layers arranged on both sides of a solid polymer electrolyte membrane, gas diffusion layers arranged on the outside of each catalyst layer, and separators arranged on the outside of each gas diffusion layer. Of the pair of catalyst layers, one catalyst layer serves as the anode of the solid polymer fuel cell, and the other catalyst layer serves as the cathode of the solid polymer fuel cell. In a typical solid polymer fuel cell, a plurality of unit cells, each having the above-described components, is stacked to achieve a desired output.

A reducing gas such as hydrogen is introduced into the separator on the anode side. The gas diffusion layer on the anode side diffuses the reducing gas, which is then introduced into the anode. The anode includes a catalyst component, a catalyst carrier that supports the catalyst component, and an electrolyte material that is proton conductive. The catalyst carrier is often composed of a carbon material. On the catalyst component, an oxidation reaction of the reducing gas occurs, generating protons and electrons. For example, in a case in which the reducing gas is hydrogen gas, the following oxidation reaction occurs:

H₂ → 2H⁺ + 2e⁻ (E₀ = 0 V).

Protons generated in this oxidation reaction pass through the electrolyte material in the anode and the solid polymer electrolyte membrane and are introduced into the cathode. The electrons are also introduced into an external circuit through the catalyst carrier, the gas diffusion layer, and the separator. The electrons perform work (generate electricity) in the external circuit and are then introduced into the separator on the cathode side. The electrons then pass through the cathode-side separator and the cathode-side gas diffusion layer and are introduced into the cathode.

The solid polymer electrolyte membrane is composed of an electrolyte material having proton conductivity. The solid polymer electrolyte membrane introduces the protons generated in the oxidation reaction into the cathode.

An oxidizing gas, such as oxygen gas or air, is introduced into the separator on the cathode side. The gas diffusion layer on the cathode side diffuses the oxidizing gas, which is then introduced into the cathode. The cathode includes a catalyst component, a catalyst carrier that supports the catalyst component, and an electrolyte material that is proton conductive. The catalyst carrier is often composed of a carbon material. On the catalyst component, a reduction reaction of the oxidizing gas occurs, thereby generating water. For example, in a case in which the oxidizing gas is oxygen gas or air, the following reduction reaction occurs:

O₂ + 4H⁺ + 4e⁻ → 2H₂O (E₀ = 1.23 V).

The water generated by the reduction reaction is discharged to the outside of the fuel cell together with the unreacted oxidizing gas. In this way, in a solid polymer fuel cell, power is generated by utilizing the energy difference (potential difference) between the oxidation reaction and the reduction reaction. In other words, the electrons generated in the oxidation reaction perform work in an external circuit.

Meanwhile, porous carbon materials to be used as catalyst carriers for solid polymer fuel cells have been studied, and various proposals have been made.

For example, Patent Literature 1 suggests a supporting carbon material for a solid polymer fuel cell, the supporting carbon material being a porous carbon material in which the specific surface area SA of mesopores having a pore diameter of from 2 to 50 nm, as determined by analyzing a nitrogen adsorption isotherm during the adsorption process using the Dollimore-Heal method, is from 600 m²/g to 1600 m²/g, the relative intensity ratio (IG'/IG) of the peak intensity (IG') of the G'-band 2,650-2,700 cm⁻¹ range to the peak intensity (IG) of the G-band 1,550-1,650 cm⁻¹ range in the Raman spectrum is from 0.8 to 2.2, and the peak position of the G'-band is from 2,660 to 2,670 cm⁻¹.

Patent Literature 2 suggests a "carbon material for a catalyst carrier of a solid polymer fuel cell, in which a nitrogen adsorption/desorption isotherm shows two hysteresis loops, a first hysteresis loop and a second hysteresis loop, in a range where the relative pressure P/P₀ is 0.4 or more."

Patent Literature 3 suggests a "carbon material for a catalyst carrier of a solid polymer fuel cell, characterized in that the particle diameter is from 10 to 20 nm, the BET specific surface area is from 200 to 700 m²/g, the difference between the nitrogen desorption isotherm value and the nitrogen adsorption isotherm value at a relative pressure P/P₀ = 0.5 is 0.10 mL/g or less, the DBP oil absorption is from 300 to 520 mL/100 g, and the half width ΔG of the G band obtained from the Raman spectroscopy spectrum is from 40 to 70 cm⁻¹.

Patent Literature 4 suggests a "carbon material for a catalyst carrier, which is used for a catalyst carrier of a solid polymer fuel cell and has a three-dimensionally branched dendritic structure, characterized by simultaneously satisfying the following (1) and (2):
(1) in a particle diameter distribution measurement using a laser diffraction/scattering particle diameter distribution analyzer, the DL/DH ratio is 1.5 or more, where DL is the cumulative distribution [%] of particles having a particle diameter of 1 µm or less based on volume diameter, and DH is the cumulative distribution [%] of particles having a particle diameter of more than 1 µm; and
(2) the mode diameter of pores in a range of from 20 nm to 200 nm, measured by mercury porosimetry, is from 40 nm to 70 nm."

Patent Literature 5 suggests a "catalyst layer for a fuel cell, including: a carbon carrier with pores having a pore diameter of from 1 nm to 5 nm, the pores having a pore volume of 15.0 mL/g or more; a catalyst containing a catalytic metal supported in the pores of the carbon carrier; and an ionomer having a glass transition temperature of 160°C or more."

Patent Literature 6 suggests an "air electrode catalyst layer having the following configuration:
(1) the air electrode catalyst layer includes a first catalyst-supporting carbon having first catalyst particles supported on the surface of a first carrier, a second catalyst-supporting carbon having second catalyst particles supported on the surface of a second carrier, and a catalyst layer ionomer;
(2) the first carrier consists of first monodisperse spherical mesoporous carbon having a most frequent pore diameter of from 2.0 nm to 3.0 nm; and
(3) the second carrier consists of second monodisperse spherical mesoporous carbon having a most frequent pore diameter of from 3.5 nm to 5.0 nm.

Patent Literature 1: WO2015/141810
Patent Literature 2: Japanese Patent Application Laid-Open (JP-A) No. 2022-066847
Patent Literature 3: JP-A No. 2020-042927
Patent Literature 4: JP-A No. 2022-156985
Patent Literature 5: Japanese Patent No. 6315348
Patent Literature 6: Japanese Patent No. 7167792

### SUMMARY OF INVENTION

### Technical Problem

Catalyst carriers for solid polymer fuel cells (hereinafter also simply referred to as "fuel cells") are required to have durability in addition to power generation characteristics.

In particular, in recent years, devices that use fuel cells are required to operate for even longer periods. For example, in the automotive field, large vehicles such as large trucks and buses are required to transport over long distances. Therefore, there is an increasing demand for improved power generation characteristics (particularly large-current characteristics) of catalyst carriers. In addition to power generation characteristics, there is also an increasing demand for improved durability of catalyst carriers (particularly resistance to electrochemical oxidative consumption) because fuel cells are exposed to high voltages during use.

As described above, currently, there is a demand for further improvements in power generation characteristics and durability compared to conventional catalyst carriers, including those described in Patent Literature 1 to 6, due to recent demands.

Therefore, an object of the present invention is to provide a carbon material for a catalyst carrier of a solid polymer fuel cell, which is excellent in both power generation characteristics and durability, a catalyst layer for a solid polymer fuel cell and a fuel cell using the same, and a method of manufacturing a carbon material for a catalyst carrier of a solid polymer fuel cell.

### Solution to Problem

The solution to the problem includes the following aspects.
<1> A carbon material for a catalyst carrier of a solid polymer fuel cell, comprising a porous carbon material that satisfies the following requirements (A), (B), (C), and (D):
   (A) a value of a pore volume VA₅₋₁₀ exhibited by pores having pore diameters of from 5 nm to less than 10 nm, determined by analyzing a nitrogen adsorption isotherm using a Dollimore-Heal (DH) method, is from 0.1 mL/g to less than 0.3 mL/g;
   (B) a difference (VA₅₋₁₀-VD₅₋₁₀) between the pore volume VA₅₋₁₀ exhibited by pores having a pore diameter of from 5 nm to less than 10 nm, determined by analyzing a nitrogen adsorption isotherm using a Dollimore-Heal (DH) method, and a pore volume VD₅₋₁₀ exhibited by pores having a pore diameter of from 5 nm to less than 10 nm, determined by analyzing a nitrogen desorption isotherm using a Dollimore-Heal (DH) method, is 0.06 mL/g or more;
   (C) an Lc of a component A having a clear peak between diffraction angles 20 = 26.0 ± 0.2° in an X-ray diffraction (XRD) spectrum obtained by XRD measurement, among those obtained by waveform separation in a range of diffraction angle 20 = from 20° to 30° using a Voigt function into the following three peaks, (LcA) is 0.9 nm or more: Peak A with a diffraction angle 20 of 25.5° or less; Peak G1 with a diffraction angle 20 in a range of 26.0° ± 0.2°; and Peak G2 with a diffraction angle 2θ in a range of 26.5° ± 0.2°; and
   (D) A nitrogen adsorption amount V_{macro} at a relative pressure of from 0.95 to 0.99 in a nitrogen adsorption isotherm range from 300 to 1200 mL/g.
<2> The carbon material for a catalyst carrier of a solid polymer fuel cell according to <1>, further satisfying at least one of the following requirements (E) or (F):
   (E) pore volume VD₅₋₁₀ exhibited by pores having a pore diameter of from 5 nm to less than 10 nm, determined by analyzing a nitrogen desorption isotherm using a Dollimore-Heal (DH) method, is less than 0.08 mL/g; and
   (F) the porous carbon material has a three-dimensional dendritic structure, and the three-dimensional dendritic structure has a branch diameter of from 40 to 100 nm.
<3> A catalyst layer for a solid polymer fuel cell, including the carbon material for a catalyst carrier of a solid polymer fuel cell according to <1> or <2>.
<4> A fuel cell including the catalyst layer for a solid polymer fuel cell according to <3>.
<5> The fuel cell according to <4>, wherein the catalyst layer for a solid polymer fuel cell is a cathode-side catalyst layer.
<6> A carbon material for a catalyst carrier of a solid polymer fuel cell, having:
   a silver acetylide production step of blowing acetylene gas into a reaction solution comprising an ammoniacal silver nitrate solution, thereby synthesizing silver acetylide;
   a decomposition step of drying the silver acetylide and then subjecting the silver acetylide to a self-decomposition explosion reaction by applying a voltage, thereby obtaining a carbon material intermediate;
   a washing treatment step of bringing the carbon material intermediate into contact with a nitric acid solution, thereby purifying the carbon material intermediate;
   a heat treatment step of heat-treating the purified carbon material intermediate in vacuum or in an inert gas atmosphere at a temperature of from 1900°C to 2300°C, thereby obtaining a heat-treated carbon material intermediate; and
   a pulverization step of pulverizing the heat-treated carbon material intermediate.

### Advantageous Effects of Invention

According to the disclosure, a carbon material for a catalyst carrier of a solid polymer fuel cell, which is excellent in both power generation characteristics and durability, a catalyst layer for a solid polymer fuel cell and a fuel cell using the same, and a method of manufacturing a carbon material for a catalyst carrier of a solid polymer fuel cell are provided.

### BRIEF DESCRIPTION OF DRAWINGS

FIG. 1 is a graph showing an example of the pore distribution of the carbon material for a catalyst carrier of a solid polymer fuel cell of the disclosure, as determined by the nitrogen adsorption isotherm and the nitrogen desorption isotherm.
FIG. 2A is a graph showing an example of an XRD spectrum obtained by XRD (X-ray diffraction) measurement and an XRD spectrum after background (BG) correction for the carbon material for a catalyst carrier of a solid polymer fuel cell of the disclosure.
FIG. 2B is a graph showing an example of an XRD spectrum, Peak A, and Peak G 1 after background correction (BG) for the carbon material for a catalyst carrier of a solid polymer fuel cell of the disclosure.
FIG. 3 is an explanatory diagram showing a method of measuring the branch diameter of the carbon material for a catalyst carrier of the disclosure.
FIG. 4 is a schematic diagram showing an example of the general configuration of the fuel cell of the disclosure.

### DESCRIPTION OF EMBODIMENTS

In the disclosure, a numerical range expressed using "to" means a range that includes the numerical values before and after "to" as the lower and upper limits. Furthermore, in a case in which the numerical range written before and after "to" is followed by "greater than" or "less than," it means that the numerical range does not include the numerical value as the lower limit or upper limit.

In the disclosure, the term "step" includes not only an independent step but also a step that cannot be clearly distinguished from other steps as long as the intended purpose of the step is achieved.

### <Carbon Material for Catalyst Carrier of Solid Polymer Fuel Cell>

The carbon material for a catalyst carrier of a solid polymer fuel cell of the disclosure comprising a porous carbon material (hereinafter also simply referred to as a "carbon material" or "porous carbon material") that satisfies the requirements (A), (B), (C), and (D) described below.

The carbon material for a catalyst carrier of the disclosure is a carbon material that is excellent in both power generation characteristics and durability. The carbon material of the disclosure was found based on the following findings.

Conventionally, porous carbon materials having internal mesopores and high specific surface areas support catalytic components in the internal mesopores, which reduces the amount of catalyst that is coated with an electrolyte material (e.g., ionomer) and inhibits reaction, compared to porous carbon materials without internal pores. This improves the activity of the catalyst and improves the power generation characteristics.

Herein, fuel cells generate water according to a reaction formula when generating electricity. Therefore, it is believed that during large-current power generation, the porous carbon material of the catalyst carrier is sufficiently wet with the generated water. Therefore, proton conduction to the catalyst is smoothly achieved by the water present in the pores inside the porous carbon material.

On the other hand, once the generated water fills the mesopores inside the porous carbon material, oxygen gas cannot be supplied to the catalyst inside the mesopores, causing a phenomenon known as flooding, in which the catalyst cannot contribute to the reaction. To suppress flooding, it is important to increase the pore volume of the mesopores inside the porous carbon material. Furthermore, it is important to discharge the generated water from the mesopores inside the porous carbon material during large-current power generation. Specifically, it is important that the internal mesopores have pores that communicate with the outside of the porous carbon material as paths for discharging water.

-Reaction Formula- Cathode: 1/2O₂ + 2e⁻ → O²⁻ Anode: O²⁻ + H₂ → H₂O + 2e⁻ Total: 1/2O₂ + H → H₂O

However, when the pore volume of the mesopores inside the porous carbon material is increased, as in the carbon material for a catalyst carrier described in Patent Literature 4, the pores that serve as passages through which the mesopores communicate with the outside of the porous carbon material are also expanded, allowing the electrolyte material (e.g., ionomer) to penetrate the mesopores inside the porous carbon material, resulting in a deterioration in power generation characteristics.

As a result of the studies conducted by the inventors, the following findings were obtained. First, in a porous carbon material having a three-dimensional dendritic structure in which the nitrogen adsorption amount V_{macro} is within a specific range so as to satisfy the requirement (D), the value of pore volume VA₅₋₁₀ of the requirement (A) is increased, and the requirement (B) (difference between pore volume VA₅₋₁₀ and pore volume VD₅₋₁₀) is satisfied. This results in a porous carbon material in which the pore volume of the mesopores inside the porous carbon material is increased while excessive expansion of the pores that serve as passages through which the mesopores communicate with the outside is suppressed. This maintains the ability to discharge water, suppresses flooding, and also suppresses the invasion of the electrolyte material (such as ionomer). As a result, the electrical performance (particularly large-current characteristics) is improved.

The cathode potential of the fuel cell becomes, for example, 1.0 V (vs. SHE) or higher during start-up and shutdown. When such a high voltage is applied, the porous carbon material is oxidized (i.e., corroded) by CO₂. Therefore, oxidation resistance is important in improving durability

As a result of the studies conducted by the inventors, the following findings were obtained. Lc of component A, having a clear peak within 2θ = 26.0 ± 0.2° in an XRD spectrum, obtained by peak resolution (LcA) in the requirement (C) is highly correlated with the resistance of the porous carbon material to oxidative consumption, and the requirement (C) is satisfied such that the porous carbon material has high durability.

The inventors then studied a method of manufacturing a porous carbon material that satisfies the requirements (A) to (D) and obtained the following findings. In a silver acetylide decomposition method, silver acetylide is decomposed by applying electricity, rather than by conventional heating. This suppresses the deactivation of silver acetylide due to heating, thereby suppressing excessive expansion of the pores that serve as passages through which the internal mesopores communicate with the outside, and obtaining a porous carbon material having a three-dimensional dendritic structure with a large pore volume for the internal mesopores. In addition, by performing heat treatment at a high temperature, a porous carbon material having high durability can be obtained.

From the above findings, it was found that the carbon material for a catalyst carrier of the disclosure is a carbon material that is excellent in both power generation characteristics and durability.

The requirements (A), (B), (C), and (D) are explained below.

Herein, from the viewpoint of improving power generation characteristics and durability, it is preferable that the carbon material for a catalyst carrier of the disclosure satisfies at least one of requirements (E), (F), and (G) in addition to requirements (A), (B), (C), and (D).

### (Requirement (A))

(A) A value of the pore volume VA₅₋₁₀ exhibited by pores having a pore diameter of from 5 nm to less than 10 nm, determined by analyzing a nitrogen adsorption isotherm using a Dollimore-Heal (DH) method, is from 0.1 mL/g to less than 0.3 mL/g;

By increasing the pore volume VA₅₋₁₀ of mesopores having a pore diameter of from 5 nm to 10 nm present inside the porous carbon material, flooding due to water generated during power generation in a fuel cell is suppressed, and power generation characteristics (particularly large-current power generation characteristics) are improved.

On the other hand, in a case in which the pore volume VA₅₋₁₀ of mesopores having a pore diameter of from 5 nm to 10 nm is excessively large, the skeleton of the porous carbon material becomes thin, the physical strength decreases, and it becomes difficult to maintain the structure under pressure when pressing for forming the catalyst layer or when fastening the catalyst layer to the cell.

Therefore, the value of pore volume VA₅₋₁₀ is set within the above-described range.

The value of pore volume VA₅₋₁₀ is preferably from 0.128 mL/g to 0.29 mL/g, and more preferably from 0.148 mL/g to 0.28 mL/g.

The value of pore volume VA₅₋₁₀ is a value measured by the measurement method shown in Examples below.

### (Requirement (B))

(B) A difference (VA₅₋₁₀-VD₅₋₁₀) between a pore volume VA₅₋₁₀ exhibited by pores having a pore diameter of from 5 nm to less than 10 nm, determined by analyzing a nitrogen adsorption isotherm using a Dollimore-Heal (DH) method, and a pore volume VD₅₋₁₀ exhibited by pores having a pore diameter of from 5 nm to less than 10 nm, determined by analyzing a nitrogen desorption isotherm using a Dollimore-Heal (DH) method, is 0.06 mL/g or more.

By increasing the difference between the pore volume VA₅₋₁₀ and the pore volume VD₅₋₁₀, a structure is ensured in which the pores that serve as passages through which the mesopores inside the porous carbon material communicate with the outside are not excessively expanded. This prevents the electrolyte material (such as ionomer) from penetrating the mesopores inside the porous carbon material, and prevents a decrease in power generation characteristics (particularly large-current power generation characteristics).

Therefore, the difference between the pore volume VA₅₋₁₀ and the pore volume VD₅₋₁₀ is set within the above-described range.

The difference between the pore volume VA₅₋₁₀ and the pore volume VD₅₋₁₀ is preferably 0.10 mL/g or more, and more preferably 0.15 mL/g or more.

Note that from the viewpoint of supplying oxygen gas to the internal mesopores and discharging the generated water, the difference between the pore volume VA₅₋₁₀ and the pore volume VD₅₋₁₀ is preferably 0.30 mL/g or less, and more preferably 0.245 mL/g or less.

The value of pore volume VD₅₋₁₀ is a value measured by the measurement method shown in Examples below.

### (Requirement (C))

(C) LcA of component A having a clear peak between diffraction angles 20 = 26.0 ± 0.2° in an X-ray diffraction (XRD) spectrum obtained by XRD measurement, among those obtained by waveform separation in a range of diffraction angle 20 = from 20° to 30° using a Voigt function into the following three peaks, is 0.9 nm or more: Peak A with a diffraction angle 20 of 25.5° or less; Peak G1 with a diffraction angle 20 in a range of 26.0° ± 0.2°; and Peak G2 with a diffraction angle 20 in a range of 26.5° ± 0.2°.

Herein, the peak present at diffraction angles between 2θ=26.0°±0.2° is a diffraction peak of the (002) plane of turbostratic carbon. The peak in a diffraction angle 2θ range of 26.5°±0.2° is a diffraction peak of the (002) plane of highly crystalline carbon similar to graphite.

Peaks G1 and G2 are peaks derived from graphitized materials, and Peak A is a peak derived from the main component of the porous carbon material. It is believed that LcA indicates the wall thickness of the pores of the porous carbon material (the crystallite size in the c-axis direction of the carbon material).

Therefore, when LcA is large, the pore wall of the main component of the porous carbon material is sufficiently thick, the pores are less likely to be lost due to oxidative consumption, and durability (ability to be resistant to electrochemical oxidation) is improved.

Therefore, LcA is set within the above-described range.

LcA is preferably 0.94 nm or more, more preferably 0.95 or more, and still more preferably 1.00 or more.

However, when LcA is excessively large, the pore wall thickness excessively increases, the edge amount of the carbon network plane forming the pore wall decreases excessively, and the ability to support the catalyst component on the pore wall tends to decrease. Therefore, LcA is preferably 1.4 nm or less.

LcA is a value measured by the measurement method shown in Examples below.

### (Requirement (D))

(D) A nitrogen adsorption amount V_{macro} at a relative pressure of from 0.95 to 0.99 in a nitrogen adsorption isotherm range from 300 to 1200 mL/g.

The nitrogen adsorption amount V_{macro} at a relative pressure of from 0.95 to 0.99 indicates the size of the macropores of the porous carbon material. When the nitrogen adsorption amount V_{macro} is large, the three-dimensional dendritic structure of the porous carbon material is highly developed. By developing a three-dimensional dendritic structure, the supply of raw material gases (H₂, O₂) to the fuel cell and the discharge of generated water are improved. This improves the power generation characteristics (particularly large-current power generation characteristics).

On the other hand, when the nitrogen adsorption amount V_{macro} is excessively large, the amount of carbon in the catalyst layer decreases when the catalyst layer is formed, making it difficult to maintain the shape of the catalyst layer.

Therefore, the nitrogen adsorption amount V_{macro} is set within the above-described range.

The nitrogen adsorption amount V_{macro} is preferably from 500 to 1200 mL/g, and more preferably from 900 to 1200 mL/g.

The nitrogen adsorption amount V_{macro} is a value measured by the measurement method shown in Examples below.

### (Requirement (E))

(E) It is preferable that pore volume VD₅₋₁₀ exhibited by pores having a pore diameter of from 5 nm to less than 10 nm, determined by analyzing a nitrogen desorption isotherm using a Dollimore-Heal (DH) method, is less than 0.08 mL/g.

The pore volume VD₅₋₁₀ indicates the size of the pores that serve as passages through which the mesopores inside the porous carbon material communicate with the outside. When the pore volume VD₅₋₁₀ is small, the pores that serve as passages through which the mesopores inside the porous carbon material communicate with the outside are narrow. In addition, the electrolyte material (such as ionomer) of the catalyst component is prevented from penetrating the mesopores inside the porous carbon material, and a decrease in power generation characteristics (particularly large-current power generation characteristics) is prevented.

Therefore, it is preferable that the pore volume VD₅₋₁₀ is set within the above-described range.

The pore volume VD₅₋₁₀ is more preferably 0.060 mL/g or less, and still more preferably 0.050 mL/g or less.

Note that from the viewpoint of supplying oxygen gas to the internal mesopores and discharging the generated water, the pore volume VD₅₋₁₀ is preferably 0.03 mL/g or more.

### (Requirement (F))

(F) The porous carbon material has a three-dimensional dendritic structure, and the branch diameter of the porous carbon material is from 40 to 100 nm. The three-dimensional dendritic structure refers to a structure having a three-dimensional dendritic structure in which rod-shaped or ring-shaped bodies are branched three-dimensionally.

Herein, to reduce the overvoltage at the time of large current, it is only necessary to reduce the mass transfer resistance at the time of large current. In other words, it is preferable to reduce the diffusion resistance of the source gas inside the porous material.

Therefore, when the porous carbon material has a three-dimensional dendritic structure with a branch diameter of from 40 to 100 nm, the diffusion resistance of the source gas is reduced (i.e., the diffusibility of the source gas is increased), improving the power generation characteristics.

The branch diameter of the porous carbon material is a value measured by the method described in Examples below.

### (Requirement (G))

Requirement (G): A Brunauer, Emmett, Teller (BET) specific surface area determined by BET analysis of the nitrogen adsorption isotherm is from 450 m²/g to 1500 m²/g.

When the BET specific surface area is within the above-described range, a larger amount of the catalyst component can be supported.

By increasing the BET specific surface area, the supportability of the catalyst component is improved.

When the BET specific surface area is excessively increased, it tends to be difficult to achieve both physical strength and durability (resistance to electrical oxidative consumption) of the porous carbon material.

Therefore, it is preferable that the BET specific surface area is within the above-described range.

The BET specific surface area is a value measured by the method described in Examples below.

### <Method of Manufacturing Carbon Material for Catalyst Carrier of Solid Polymer Fuel Cell>

Hereinafter, an example of the method of manufacturing a carbon material for a catalyst carrier of a solid polymer fuel cell of the disclosure (hereinafter also referred to as the "method of manufacturing a carbon material") will be described.

The method of manufacturing a carbon material of the disclosure includes:
a silver acetylide production step of blowing acetylene gas into a reaction solution comprising an ammoniacal silver nitrate solution, thereby synthesizing silver acetylide;
a decomposition step of drying the silver acetylide and then subjecting the silver acetylide to a self-decomposition explosion reaction by applying a voltage, thereby obtaining a carbon material intermediate;
a washing treatment step of bringing the carbon material intermediate into contact with a nitric acid solution, thereby purifying the carbon material intermediate;
a heat treatment step of heat-treating the purified carbon material intermediate in vacuum or in an inert gas atmosphere at a temperature of from 1900°C to 2300°C, thereby obtaining a heat-treated carbon material intermediate; and
a pulverization step of pulverizing the heat-treated carbon material intermediate.

In the method of manufacturing a carbon material of the disclosure, a carbon material that satisfies the requirements (A) to (D), preferably a carbon material that satisfies at least one of the requirements (E) to (G) in addition to the requirements (A) to (D), can be obtained through the above steps.

Details of each step will be described in detail below.

### (Silver Acetylide Production Step)

In the silver acetylide production step, acetylene gas is blown into a reaction solution comprising an ammoniacal silver nitrate solution (hereinafter also referred to as "silver nitrate aqueous solution"), thereby synthesizing silver acetylide.

Silver acetylide is synthesized by adjusting the mass ratio of acetylene gas to silver nitrate. The method of bringing silver nitrate into contact with acetylene gas includes, for example, passing acetylene gas through an aqueous silver nitrate solution, more specifically, blowing acetylene gas into an aqueous silver nitrate solution. Furthermore, when the silver nitrate is brought into contact with the acetylene gas, the aqueous silver nitrate solution may be irradiated with ultrasonic waves. This promotes the dissolution and dispersion of the acetylene gas in the aqueous silver nitrate solution. In this case, it is preferable to stir the aqueous silver nitrate solution when bringing silver nitrate into contact with acetylene gas. This increases the frequency of contact between acetylene gas and silver nitrate, resulting in efficient production of silver acetylide. The stirring may be carried out using a general stirring blade or a stirring bar such as a magnetic stirrer. This allows silver acetylide to be obtained as a bulky precipitate of white crystals.

### (Decomposition Step)

In the decomposition step, the silver acetylide is dried and then subjected to a self-decomposition explosion reaction by applying a voltage, thereby obtaining a carbon material intermediate.

Drying silver acetylide is carried out, for example, by heating under a reduced pressure atmosphere (e.g., in vacuum) at a temperature of from 40°C to 100°C. This makes it possible to remove the solvent in the reaction solution remaining in the silver acetylide, preventing the thermal energy of the explosion from being consumed as sensible heat for the phase transition of the solvent to a gas phase, and making the decomposition of silver acetylide more efficient. At this temperature, silver acetylide does not decompose.

In the self-decomposition explosion reaction of silver acetylide, silver acetylide explodes on a nanoscale, undergoes phase separation into silver and carbon, and a composite material containing silver and carbon (carbon material intermediate) can be obtained.

At this time, silver forms nano-sized particles, is gasified by the heat of reaction, and is ejected onto the surface of the particles. Carbon has a highly aromatic structure because three acetylene-based compounds, such as acetylene molecules, can easily come together to form a benzene ring. At this time, mesopores are formed in a self-organized manner. Furthermore, since silver forms nanoparticles and adheres to the carbon phase, the carbon phase from which the silver has been removed has a porous structure.

The basic structure of the carbon phase of the composite material containing silver and carbon (carbon material intermediate) is mainly composed of several layers of graphene due to the formation of a polycyclic aromatic compound by the acetylene-based compounds. Therefore, it is possible to obtain a carbon material having a large specific surface area and high porosity from the carbon material from which silver has been removed.

Herein, the self-decomposition explosion reaction of silver acetylide is carried out by applying a voltage to silver acetylide. Compared to a case in which self-decomposition explosion of silver acetylide is induced by heating, when self-decomposition explosion of silver acetylide is induced by applying a voltage, the self-decomposition of silver acetylide is promoted while suppressing the deactivation of silver acetylide by heat. As a result, a porous carbon material satisfying the requirements (A), (B), (C), and (D) (preferably a porous carbon material satisfying at least one of the requirements (E) to (G) in addition to the requirements (A), (B), (C), and (D)) can be obtained.

The conditions for applying a voltage to silver acetylide are, for example, ordinary temperature (25°C), normal pressure (1 atmosphere), voltage of from 1 to 50 kV, and heat of from 0.1 to 10 J. When silver acetylide is sufficiently dried, some of the silver acetylide undergoes self-decomposition, which leads to a chain reaction of self-decomposition, eventually resulting in the entire silver acetylide being self-decomposed. The greater the amount of silver acetylide present per unit volume during decomposition, the greater the amount of energy generated during decomposition, eventually increasing the mesopore volume.

### (Washing Treatment Step)

In the washing treatment step, the carbon material intermediate is brought into contact with a nitric acid solution, thereby purifying the carbon material intermediate.

The silver is removed from the carbon material intermediate by washing the carbon material intermediate. The washing can be carried out by a known method. For example, the carbon material intermediate can be immersed in hot nitric acid so as to dissolve the silver, thereby obtaining a purified carbon material intermediate from which the silver remaining on the surface and inside has been removed.

### (Heat Treatment Step)

In the heat treatment step, the purified carbon material intermediate is heat-treated in vacuum or in an inert gas (such as nitrogen or argon) atmosphere at a temperature of from 1900°C to 2300°C (preferably from 2000°C to 2200°C), thereby obtaining a heat-treated carbon material intermediate.

By heat-treating the carbon material intermediate at 1900°C or more, highly aromatic carbon crystals that will form the skeleton of the porous carbon material develop, and the pore walls become sufficiently thick, thereby obtaining a porous carbon material that satisfies the requirement (C).

The heat treatment of the carbon material intermediate at 2300°C or less prevents a decrease in the mesopore volume due to excessive crystallization of carbon. As a result, a porous carbon material satisfying the requirements (A), (B), (C), and (D) (preferably a porous carbon material satisfying at least one of the requirements (E) to (G) in addition to the requirements (A), (B), (C), and (D)) can be obtained.

The heat treatment step is not particularly limited, but can be carried out, for example, under a reduced pressure atmosphere or an inert gas atmosphere, preferably under an inert gas atmosphere. Examples of the inert gas that can be used include, but are not particularly limited to, nitrogen and argon.

Through the above steps, the carbon material of the disclosure can be obtained.

### <Catalyst Layer for Solid Polymer Fuel Cell and Solid Polymer Fuel Cell>

The solid polymer fuel cell will now be described together with the catalyst layer for a solid polymer fuel cell of the disclosure.

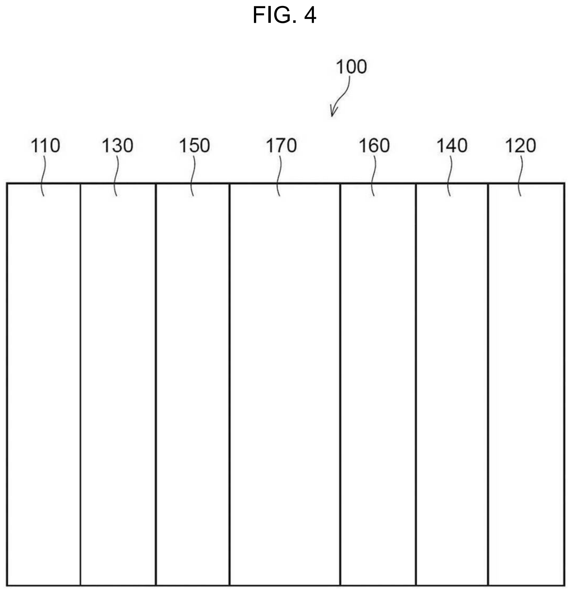

The carbon material of the disclosure can be applied to, for example, catalyst layers 150 and 160 provided in a solid polymer fuel cell 100 shown in FIG. 4. FIG. 4 is a schematic diagram showing an example of the general configuration of the fuel cell of the disclosure.

The solid polymer fuel cell 100 shown in FIG. 4 includes separators 110 and 120, gas diffusion layers 130 and 140, catalyst layers 150 and 160, and an electrolyte membrane 170.

The separator 110 is an anode-side separator that introduces a reducing gas such as hydrogen into the gas diffusion layer 130. The separator 120 is a cathode-side separator that introduces an oxidizing gas such as oxygen gas or air into a gas diffusion condensation phase. The type of separators 110 and 120 is not particularly limited, and may be any separator used in conventional fuel cells (e.g., solid polymer fuel cells).

The gas diffusion layer 130 is an anode-side gas diffusion layer that diffuses the reducing gas supplied from the separator 110 and then supplies the gas to the catalyst layer 150. The gas diffusion layer 140 is a cathode-side gas diffusion layer that diffuses the oxidizing gas supplied from the separator 120 and then supplies the gas to the catalyst layer 160. The type of gas diffusion layers 130 and 140 is not particularly limited, and may be any gas diffusion layer used in conventional fuel cells (e.g., solid polymer fuel cells). Examples of the gas diffusion layers 130 and 140 include porous carbon materials (such as carbon cloth and carbon paper) and porous metal materials (such as metal mesh and metal wool). Preferred examples of the gas diffusion layers 130 and 140 include a gas diffusion layer with a two-layer structure. Specifically, the gas diffusion layers 130 and 140 have a two-layer structure in which the layer on the side of the separator 110 or 120 is a gas diffusion fiber layer containing a fibrous carbon material as a main component, and the layer on the side of the catalyst layer 150 or 160 is a micropore layer containing carbon black as a main component.

The catalyst layer 150 is a so-called anode. In the catalyst layer 150, an oxidation reaction of the reducing gas occurs, generating protons and electrons. For example, in a case in which the reducing gas is hydrogen gas, the following oxidation reaction occurs:

H₂ → 2H⁺+ 2e⁻ (E₀ = 0 V).

The protons generated by the oxidation reaction pass through the catalyst layer 150 and the electrolyte membrane 170, and reach the catalyst layer 160. The electrons generated by the oxidation reaction pass through the catalyst layer 150, the gas diffusion layer 130, and the separator 110, and reach an external circuit. The electrons perform work (generate electricity) in the external circuit and are then introduced into the separator 120. The electrons then pass through the separator 120 and the gas diffusion layer 140, and reach the catalyst layer 160.

The configuration of the catalyst layer 150 that serves as the anode is not particularly limited. The configuration of the catalyst layer 150 may be the same as that of a conventional anode, may be the same as that of the catalyst layer 160, or may be more hydrophilic than the catalyst layer 160.

The catalyst layer 160 is a so-called cathode. In the catalyst layer 160, a reduction reaction of the oxidizing gas occurs, thereby generating water. For example, in a case in which the oxidizing gas is oxygen gas or air, the following reduction reaction occurs: The water generated by the oxidation reaction is discharged to the outside of the solid polymer fuel cell 100 together with the unreacted oxidizing gas.

O₂ + 4H⁺ + 4e⁻ → 2H₂O (E₀ = 1.23 V).

In this way, in the solid polymer fuel cell 100, power is generated by utilizing the energy difference (potential difference) between the oxidation reaction and the reduction reaction. In other words, the electrons generated in the oxidation reaction perform work in an external circuit.

The catalyst layer 160 contains the carbon material for a catalyst carrier of the disclosure. In other words, the catalyst layer 160 contains the carbon material for a catalyst carrier of the disclosure, an electrolyte material (such as ionomer), and a catalyst component (such as platinum). This allows the catalyst utilization rate in the catalyst layer 160 to be increased. Furthermore, the catalyst utilization rate of the solid polymer fuel cell 100 can be increased.

The catalyst loading in the catalyst layer 160 is not particularly limited, but is preferably from 30% by mass to less than 80% by mass. When the catalyst loading is within this range, the catalyst utilization rate will be further increased. Herein, the catalyst loading is expressed as % by mass of the catalyst component with respect to the total mass of the catalyst-supporting particles (particles in which the catalyst component is supported on a carbon material for a catalyst carrier). In a case in which the catalyst loading is less than 30% by mass, it may be necessary to increase the thickness of the catalyst layer 160 in order to make the solid polymer fuel cell 100 practical. On the other hand, in a case in which the catalyst loading is 80% by mass or more, catalyst aggregation is likely to occur. In addition, the catalyst layer 160 may become excessively thin, which may cause flooding.

The mass ratio I/C of the mass I of the electrolyte material to the mass C of the carbon material for a catalyst carrier in the catalyst layer 160 is not particularly limited, but is preferably more than 0.5 and less than 5.0. In this case, both a pore network and an electrolyte material network can be achieved, resulting in a high catalyst utilization rate. On the other hand, in a case in which the mass ratio I/C is 0.5 or less, the electrolyte material network becomes weak, and the proton conduction resistance tends to increase. In a case in which the mass ratio I/C is 5.0 or more, the pore network may be disrupted by the electrolyte material. In either case, the catalyst utilization rate may be reduced.

The thickness of the catalyst layer 160 is not particularly limited, but is preferably more than 5 µm and less than 20 µm. In this case, the oxidizing gas is more likely to diffuse into the catalyst layer 160, and flooding is less likely to occur. In a case in which the thickness of the catalyst layer 160 is 5 µm or less, flooding is likely to occur. In a case in which the thickness of the catalyst layer 160 is 20 µm or more, the oxidizing gas is less likely to diffuse within the catalyst layer 160, and the catalytic component near the electrolyte membrane 170 is less likely to function. In other words, the catalyst utilization rate may be reduced.

The electrolyte membrane 170 is composed of an electrolyte material having proton conductivity. The electrolyte membrane 170 introduces the protons generated in the oxidation reaction into the catalyst layer 160 (cathode). Herein, the type of electrolyte material is not particularly limited, and may be any electrolyte material used in conventional fuel cells, for example, solid polymer fuel cells. Examples of suitable electrolyte materials include electrolyte resins. Examples of electrolyte resins include polymers into which a phosphate group, a sulfonic acid group, or the like has been introduced. Specific examples thereof include perfluorosulfonic acid polymers and polymers into which benzenesulfonic acid or the like has been introduced. Needless to say, the electrolyte material may be other types of electrolyte material. Examples of such electrolyte materials include inorganic and inorganic-organic hybrid electrolyte materials. The solid polymer fuel cell 100 may be a fuel cell that operates within a temperature range of from ordinary temperature (25°C) to 150°C.

### <Method of Manufacturing Solid Polymer Fuel Cell>

The method of manufacturing the solid polymer fuel cell 100 is not particularly limited, and it may be a manufacturing method similar to a conventional manufacturing method. Note that the carbon material for a catalyst carrier of the disclosure is used for the catalyst carrier. Of the catalyst layers 150 and 160, the carbon material for a catalyst carrier of the disclosure is preferably used at least for the catalyst carrier in the catalyst layer 160 that serves as the cathode. Needless to say, the carbon material for a catalyst carrier of the disclosure may be used for the catalyst carriers of both the catalyst layer 150 that serves as the anode and the catalyst layer 160 that serves as the cathode.

### EXAMPLES

### <Methods of Measuring Individual Parameters>

An experimental example of the carbon material for a catalyst carrier of the disclosure will be described. First, the methods of measuring individual parameters will be described.

### <Measurement of Nitrogen Adsorption/Desorption Isotherms (VA₅₋₁₀, VD₅₋₁₀, VA₅₋₁₀-VD₅₋₁₀, V_{macro}, BET Specific Surface Area)>

About 30 mg of a sample of the carbon material for a catalyst carrier was weighed out and vacuum-dried at 200°C for 2 hours. After that, the nitrogen adsorption and desorption isotherms were measured using an automatic specific surface area measuring device (AUTOSORB iQ, manufactured by Anton Paar Japan K.K.) with nitrogen gas as the adsorbate.

The pore volumes VA₅₋₁₀ exhibited by pores having a pore diameter of from 5 to 10 nm and VD₅₋₁₀ exhibited by pores having a pore diameter of from 5 to 10 nm were calculated by analyzing the nitrogen adsorption/desorption isotherms by the DH method using software attached to the device. The difference between the pore volume VA₅₋₁₀ and the pore volume VD₅₋₁₀ (VA₅₋₁₀-VD₅₋₁₀: indicated as △5-10 in the table) was also determined.

The nitrogen adsorption amount V_{macro} was calculated by calculating the difference between the adsorption amount[cc(STP)/g] when the relative pressure of the nitrogen adsorption isotherm was 0.95 and the adsorption amount[cc(STP)/g] when the relative pressure was 0.99, and this was taken as the value of V_{macro}[cc(STP)/g].

The BET specific surface area was calculated by BET analysis of the nitrogen adsorption isotherm in the relative pressure P/P₀ range of from 0.05 to 0.15.

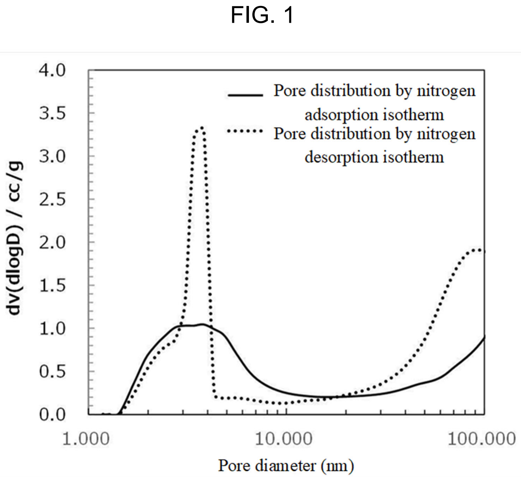

FIG. 1 shows an example of the pore distribution of the carbon material for a catalyst carrier of the disclosure, as determined by the nitrogen adsorption isotherm and the nitrogen desorption isotherm.

### <Measurement of Peak within 20 = 26.0±0.2° in XRD Spectrum, and LcA>

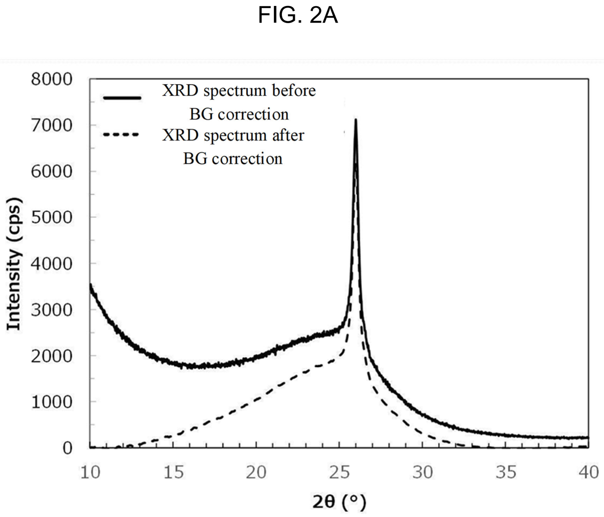

First, about 30 mg of a sample of the carbon material for a catalyst carrier was weighed out and placed on a silicon non-reflective plate. The reflective plate with the sample placed on it was set in an X-ray diffractometer (RINT-TTRIII manufactured by Rigaku Holdings Corporation), and measurements were performed at ordinary temperature (25°C) with a scanning step of 0.02°, an angle sweep rate of 1°/min, and a Cu-Kα source. Thus, an XRD spectrum was obtained. FIG. 2A shows an example of an XRD spectrum (i.e., an XRD spectrum before background (BG) correction) and an XRD spectrum after background (BG) correction of the carbon material for a catalyst carrier of the disclosure.

Next, the background of the obtained XRD spectrum was removed, i.e., background (BG) correction and smoothing were performed (see FIG. 2A).

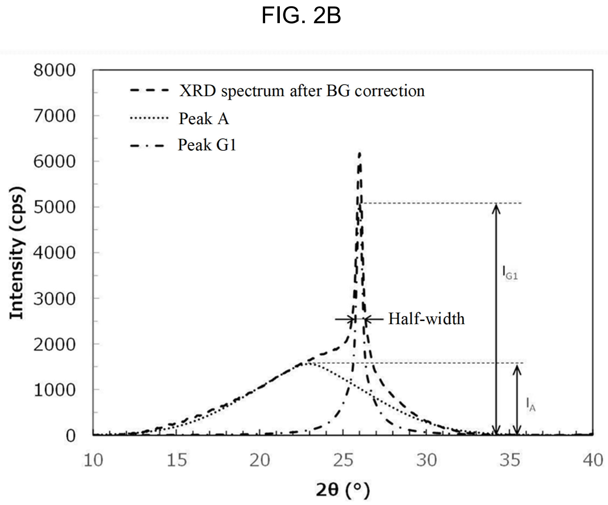

Next, in the XRD spectrum after background (BG) correction, waveform separation was performed in a range of 2θ = from 20° to 30° using a Voigt function, thereby yielding the following three peaks: Peak A at a peak position of 25.5° or less; Peak G1 at a peak position of 26.0° ± 0.2°; and Peak G2 at a peak position of 26.5° ± 0.2°. Then, the presence or absence of clear peaks was confirmed (see FIG. 2B).

Herein, the expression "clear peak between...2θ = 26.0 ± 0.2°" refers to Peak G1, which has an intensity ratio of 0.5 or more to Peak A at 20 = 25.5° or less among those obtained by waveform separation with a half-width of 5° or less within 2θ = 26.0 ± 0.2° in the XRD spectrum (see FIG. 2B). In FIG. 2B, I_{G1} indicates the intensity of Peak G1, and I_{A} indicates the intensity of Peak A. In a case in which Peak G1 satisfying the above conditions is exhibited, a clear peak is exhibited within 20 = 26.0 ± 0.2° in the XRD spectrum before waveform separation from which the background was removed.

Furthermore, for Peak A at 2θ=25.5° or less among those obtained by waveform separation, LcA was calculated using the Scherrer's formula (LcA=Kλ/βcosθ). The shape factor K is 1, the X-ray wavelength λ is 1.54184 Å, and β is the half-width of peak A.

### <Measurement of Branch Diameter of Three-dimensional Dendritic Structure>

The branch diameter of the three-dimensional dendritic structure was measured by observing SEM images of five fields of view at a magnification of 100,000 times (2.5 µm × 2 µm) using a scanning electron microscope (SEM; SU-9000 manufactured by Hitachi High-Tech Corporation), measuring the branch diameter at 20 points on each field of view, and averaging the measured values from a total of 100 points to obtain the branch diameter value.

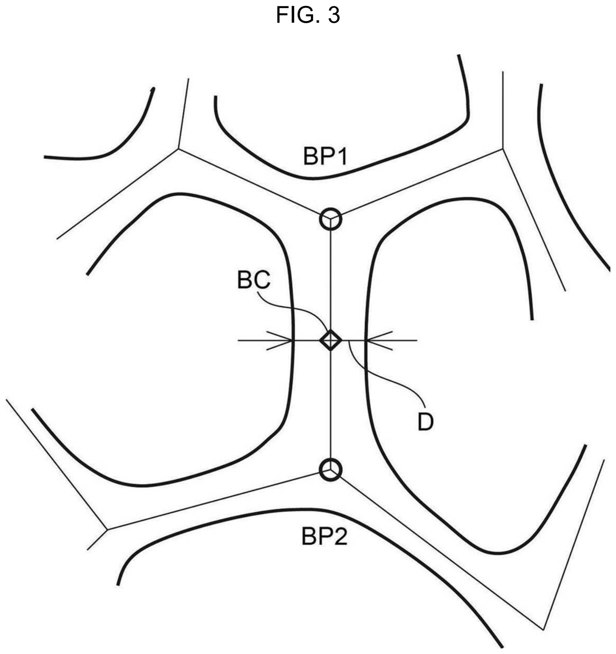

The branch diameter to be measured is the thickness of the central part between two adjacent branching points (the middle part of the branch) of the branch of interest (see FIG. 3; in FIG. 3, D indicates the branch diameter per point).

The method of measuring the branch diameter will be described with reference to FIG. 3. In FIG. 3, one branch of interest is shown. For this branch of interest, branching points BP1 and BP2 are identified. Next, the thickness (width) of the branch is measured at a position where the specified branch point BP1 and branch point BP2 are connected to form a perpendicular bisector BC connecting the branching point BP1 and branching point BP2. The measured thickness of the branch is the branch diameter D per point. The branch length is expressed as the distance from the branching point BP1 to the branching point BP2 (see FIG. 3).

### <Examples: Preparation of Porous Carbon Material for Catalyst Carrier>

### (Example 1)

### (1) Silver Acetylide Production Step

Silver nitrate was dissolved in an amount of 25.8 g in 61.2 g of a 25% by mass aqueous ammonia solution, and 42.5 g of water was added thereto, after which dry nitrogen was blown in, thereby removing residual oxygen. Next, the solution was stirred and vibrated by immersing an ultrasonic vibrator in the solution, while acetylene gas was sprayed onto the solution at a flow rate of 18.5 mL/min for 47 minutes. This allowed a solid matter of silver acetylide to precipitate in the solution. The resultant precipitate was then filtered through a membrane filter. During the filtration, the precipitate was washed with pure water, and a small amount of pure water was further added, thereby impregnating the precipitate with the pure water.

### (2) Decomposition Step

The silver acetylide obtained in the silver acetylide production step was charged in an amount of 1 g, while still impregnated with pure water, in a stainless steel vessel having a diameter of 30 cm and equipped with an electrode for applying static electricity. The pressure inside the vessel was reduced, followed by vacuum drying at from 30°C to 40°C for 1 hour. After vacuum drying, a voltage of 0.4 J was applied at 20 kV without removing the silver acetylide from the vessel. When voltage was applied, a nanoscale decomposition reaction of silver acetylide occurred inside the vessel, ejecting the encapsulated silver. A silver-encapsulated nanostructure with numerous ejection holes formed on the surface and inside was obtained as a carbon material intermediate (i.e., a composite material containing silver and carbon).

### (3) Washing Treatment Step

The carbon material intermediate obtained in the decomposition step was immersed in an amount of 10 g in 200 mL of a 30% by mass nitric acid solution and washed at 90°C for 2 hours, thereby removing remaining silver particles. Next, the nitric acid was removed from the washed carbon material intermediate using a centrifuge. Furthermore, to sufficiently remove the remaining nitric acid, the carbon material intermediate after centrifugation was dispersed again in pure water, and this was again subjected to the centrifuge, thereby separating the solid from the liquid. By repeating this water washing operation twice, the nitric acid was removed, and thus a purified carbon material intermediate was obtained.

The purified carbon material intermediate was treated at 140°C in an air atmosphere for 2 hours, thereby removing moisture for drying.

### (4) Heat Treatment Step

The purified carbon material intermediate was subjected to a first heat treatment at 1100°C for 2 hours under a flow of argon, thereby obtaining a porous carbon material intermediate.

Furthermore, the porous carbon material intermediate was heated to 2000°C at a rate of 15°C/min under a flow of argon. After the temperature reached 2000°C, the second heat treatment was carried out by holding the temperature for 1 hour.

### (5) Pulverization Step

The carbon material intermediate obtained in the heat treatment step was subjected to pulverization and classification simultaneously using an airflow pulverizer/classifier SJ-100GMP manufactured by NISSHIN ENGINEERING INC. under conditions of a pulverization pressure of 0.8 MPa and a powder insertion rate of 100 g/hr.

### Through the above steps, a porous carbon material was prepared.

### (Example 2)

A porous carbon material was prepared in the same manner as in Example 1, except that in the heat treatment step, the holding temperature in the second heat treatment was changed from 2000°C to 2100°C.

### (Example 3)

A porous carbon material was prepared in the same manner as in Example 1, except that in the heat treatment step, the holding temperature in the second heat treatment was changed from 2000°C to 2200°C.

### (Example 4)

A porous carbon material was prepared in the same manner as in Example 1, except that in the decomposition step, the amount of silver acetylide charged in the stainless steel vessel was changed from 1 g to 10 g.

### (Example 5)

A porous carbon material was prepared in the same manner as in Example 1, except that in the decomposition step, the amount of silver acetylide charged in the stainless steel vessel was changed from 1 g to 10 g, and in the heat treatment step, the holding temperature of the second heat treatment was changed from 2000°C to 2200°C.

### (Example 6)

A porous carbon material was prepared in the same manner as in Example 1, except that in the decomposition step, the amount of silver acetylide charged in the stainless steel vessel was changed from 1 g to 20 g.

### (Example 7)

A porous carbon material was prepared in the same manner as in Example 1, except that in the decomposition step, the amount of silver acetylide charged in the stainless steel vessel was changed from 1 g to 20 g, and in the heat treatment step, the holding temperature of the second heat treatment was changed from 2000°C to 2100°C.

### (Example 8)

Instead of the washing treatment step, 10 g of the carbon material intermediate obtained by the silver acetylide decomposition step was weighed and placed in a graphite crucible in a Tammann furnace capable of heating up to 3000°C in an argon atmosphere, in which the pressure was reduced to 0.5 Pa after vacuum substitution with argon gas, and the temperature was raised to 1400°C at a rate of 15°C/min. A porous carbon material was prepared in the same manner as in Example 1, except that after the predetermined temperature was reached, the temperature was maintained for 10 hours so as to remove the silver, thereby obtaining a purified carbon material intermediate from which silver had been removed.

### (Example 9)

A porous carbon material was prepared in the same manner as in Example 8, except that in the heat treatment step, the holding temperature in the second heat treatment was changed from 2000°C to 2200°C.

### (Example 10)

A porous carbon material was prepared in the same manner as in Example 1, except that in the silver acetylide production step, the acetylene gas spraying time was changed from 47 minutes to 60 minutes.

### (Example 11)

A porous carbon material was prepared in the same manner as in Example 10, except that in the heat treatment step, the holding temperature in the second heat treatment was changed from 2000°C to 2200°C.

### (Comparative Example 1)

A porous carbon material was prepared in the same manner as in Example 1, except that in the heat treatment step, the holding temperature in the second heat treatment was changed from 2000°C to 1600°C.

### (Comparative Example 2)

A porous carbon material was prepared in the same manner as in Example 1, except that in the heat treatment step, the holding temperature in the second heat treatment was changed from 2000°C to 1800°C.

### (Comparative Example 3)

A porous carbon material was prepared in the same manner as in Example 1, except that the holding temperature in the heat treatment step was changed from 2000°C to 2400°C.

### (Comparative Example 4)

A porous carbon material was prepared in the same manner as in Example 1, except that in the heat treatment step, the holding temperature in the second heat treatment was changed from 2000°C to 2600°C.

### (Comparative Example 5)

The silver acetylide obtained in the silver acetylide production step was charged in an amount of 1 g, while still impregnated with pure water, in a stainless steel vessel having a diameter of 30 cm. The pressure inside the vessel was reduced, followed by vacuum drying at from 30°C to 40°C for 1 hour. After vacuum drying, the resultant product was rapidly heated to from 160°C to 200°C without being removed from the vessel, and heated for 20 minutes.

A porous carbon material was prepared in the same manner as in Example 1, except for carrying out these operations.

### (Comparative Example 6)

The silver acetylide obtained in the silver acetylide production step was charged in an amount of 1 g, while still impregnated with pure water, in a stainless steel vessel having a diameter of 30 cm. The pressure inside the vessel was reduced, followed by vacuum drying at from 30°C to 40°C for 1 hour. After vacuum drying, the resultant product was rapidly heated to from 160°C to 200°C without being removed from the vessel, the heating was continued for 20 minutes, and the holding temperature for the heat treatment step was changed from 2000°C to 2200°C.

A porous carbon material was prepared in the same manner as in Example 1, except for carrying out these operations.

### (Comparative Example 7)

The carbon material obtained in Comparative Example 5 was subjected to the pulverization step and then the following steps (6) and (7).

### (6) Contact with Carbon Dioxide (Activation) Step

A few grams of the pulverized product obtained in the pulverization step (5) was placed in an alumina boat, which was then placed inside a tubular electric furnace, and the atmosphere inside the tubular electric furnace was replaced with carbon dioxide gas using 100% by volume of carbon dioxide gas. Heat treatment was carried out at a temperature of 1050°C for 0.5 hours while flowing carbon dioxide gas.

### (7) Second Pulverization Step

The activated pulverized product was pulverized and classified in the same manner as in the pulverization step (5) above.

### (Comparative Example 8)

A porous carbon material was prepared in the same manner as in Comparative Example 7, except that the heat treatment time in the contact (activation) step with carbon dioxide was set to 1 hour.

### (Comparative Example 9)

KB300 (KETJENBLACK, manufactured by LION SPECIALTY CHEMICALS CO., LTD., EC300J) was heated to 1600°C at a rate of 15°C/min under a flow of argon. After the temperature reached 1600°C, the heat treatment was carried out by holding the temperature for 1 hour.

Thus, a porous carbon material was prepared.

### (Comparative Example 10)

KB600 (KETJENBLACK, manufactured by LION SPECIALTY CHEMICALS CO., LTD., ECP600JD) was heated to 1600°C at a rate of 15°C/min under a flow of argon. After the temperature reached 1600°C, the heat treatment was carried out by holding the temperature for 1 hour.

Thus, a porous carbon material was prepared.

### (Comparative Example 11)

A CNovel-MH (manufactured by Toyo Tanso Co., Ltd.) was heated to 2000°C at a rate of 15°C/min under a flow of argon. After the temperature reached 2000°C, the heat treatment was carried out by holding the temperature for 1 hour.

Thus, a porous carbon material was prepared.

### (Comparative Example 12)

A CNovel_MJ(4)010 (manufactured by Toyo Tanso Co., Ltd.) was heated to 2000°C at a rate of 15°C/min under a flow of argon. After the temperature reached 2000°C, the heat treatment was carried out by holding the temperature for 1 hour.

Thus, a porous carbon material was prepared.

### <Preparation of Catalyst, Preparation of Catalyst Layer, Preparation of MEA, Assembly of Fuel Cell, and Evaluation of Cell Performance (Power Generation Characteristics, Durability)>

Using the porous carbon material of each Example, a catalyst for a solid polymer fuel cell supporting a catalytic metal was prepared as follows. Furthermore, a catalyst layer ink liquid was prepared using the obtained catalyst, and then a catalyst layer was formed using this catalyst layer ink liquid, and further, a membrane electrode assembly (MEA) was prepared using the formed catalyst layer. The prepared MEA was incorporated into a fuel cell, and a power generation test was carried out using a fuel cell measuring device. The preparation of each member and cell evaluation through a power generation test will be described in detail below.

### (1) Preparation of Catalyst (Platinum-supporting Carbon Material) for Solid Polymer Fuel Cell

Each porous carbon material prepared in each Example was dispersed in distilled water, and formaldehyde was added to this dispersion, which was then placed in a water bath set at 40°C. After the temperature of the dispersion reached 40°C, the same as that of the bath, a dinitrodiamine Pt complex in a nitric acid aqueous solution was slowly poured into the dispersion while stirring. After that, stirring was continued for about 2 hours, followed by filtration and washing of the resultant solid matter. The solid matter thus obtained was vacuum-dried at 90°C, pulverized in a mortar, and then heat-treated at 200°C for 1 hour in an argon atmosphere containing 5% by volume of hydrogen, thereby preparing a carbon material supporting platinum catalyst particles. The amount of platinum supported by this platinum-supporting carbon material was adjusted to 25% by mass with respect to the total mass of the porous carbon material and platinum particles and was confirmed by measurement with inductively coupled plasma atomic emission spectrometry (ICP-AES).

### (2) Preparation of Catalyst Layer

The platinum-supporting carbon material (Pt catalyst) prepared as described above and a 5% by mass NAFION solution (DE2020CS, registered trademark: NAFION, manufactured by DuPont) as an electrolyte resin were used, and the Pt catalyst and NAFION were mixed in an Ar atmosphere in a ratio of 1.0 times the mass of the platinum catalyst particle-supporting carbon material to the mass of the NAFION solid content, and then gently stirred. Then, the Pt catalyst was crushed by ultrasonic waves, and ethanol was further added to adjust the total solid concentration of the Pt catalyst and the electrolyte resin to 1.0% by mass, thereby preparing a catalyst layer ink liquid in which the Pt catalyst and the electrolyte resin were mixed.

Ethanol was further added to each catalyst layer ink liquid thus prepared, each having a solid content of 1.0% by mass, thereby preparing a catalyst layer ink liquid for spray coating having a platinum concentration of 0.5% by mass. The spray conditions were adjusted such that the mass of platinum per unit area of the catalyst layer (hereinafter referred to as "platinum coating weight") was 0.2 mg/cm², and the catalyst layer ink for spray application was sprayed onto a TEFLON (registered trademark) sheet, and then heat-treated at 120°C for 60 minutes in argon, thereby preparing the catalyst layer.

### (3) Preparation of MEA

Using the catalyst layer prepared as above, a membrane electrode assembly (MEA) was prepared by the following method.

A square electrolyte membrane having a side length of 6 cm was cut out from a NAFION membrane (NR211 manufactured by DuPont). The anode and cathode catalyst layers coated on the TEFLON (registered trademark) sheet were each cut into squares measuring 2.5 cm on a side using a cutter knife.

The electrolyte membrane was sandwiched between the anode and cathode catalyst layers cut out in this way such that the catalyst layers were in contact with each other with the center of the electrolyte membrane sandwiched therebetween and there was no misalignment between them, pressed at 120°C and 100 kg/cm² for 10 minutes, then cooled to room temperature. After that, the TEFLON (registered trademark) sheet was carefully peeled off from both the anode and cathode, thereby preparing a catalyst layer-electrolyte membrane assembly in which the catalyst layers of the anode and cathode were fixed to the electrolyte membrane.

Next, a pair of square carbon paper sheets, each measuring 2.5 cm on a side, was cut out from carbon paper (39BC manufactured by SGL CARBON Japan Ltd.), thereby forming a gas diffusion layer. The catalyst layer-electrolyte membrane assembly was sandwiched between these carbon papers such that the anode and cathode catalyst layers were aligned without misalignment, and pressed at 120°C and 50 kg/cm² for 10 minutes, thereby preparing an MEA.

The coating weight of each component of the catalytic metal component, carbon material, and electrolyte material in each MEA prepared was calculated from the mass ratio of the catalyst layer composition, for which the mass of the catalyst layer fixed to the NAFION membrane (electrolyte membrane) was determined from the difference between the mass of the TEFLON (registered trademark) sheet with the catalyst layer before pressing and the mass of the TEFLON (registered trademark) sheet peeled off after pressing.

### (4) Fuel Cell Assembly and Evaluation of Fuel Cell Power Generation Characteristics

The MEAs prepared using the porous carbon materials of the Examples and Comparative Examples were assembled into cells, which were then set in a fuel cell measuring device, and the performance of the fuel cells was evaluated according to the following procedures.

Air was supplied as an oxidizing gas to the cathode side, and pure hydrogen was supplied as a reactant gas to the anode side. The pressure was adjusted using a back pressure valve installed downstream of the cell so as to achieve utilization rates of 40% and 70%, respectively, and a back pressure of 0.05 MPa was applied. The cell temperature was set to 80°C, and the air and pure hydrogen to be supplied to the fuel cell were humidified by passing them through distilled water kept at 65°C in a humidifier (i.e., bubbling). This allowed the relative humidity of the anode and cathode to be approximately 100%.

Under these conditions, the load was gradually increased while the reactant gas was supplied to the cell, and the cell terminal voltage at a current density of 1300 mA/cm² was recorded as the output voltage so as to evaluate the performance of the fuel cell. The evaluation was carried out according to the following criteria: passed ranks A and B; and failed rank C. The results are shown in Table 1.

### [Passed Rank]

A+: Output voltage of 0.55 V or more at 1300 mA/cm².
A: Output voltage of 0.50 V or more at 1300 mA/cm².
B: Output voltage of 0.45 V or more at 1300 mA/cm².

### [Failed Rank]

C: Not meeting the passed rank B.

### (5) Durability Evaluation

An operation of repeating an operation in which the cell voltage was set to 0.6 V and held for 4 seconds, and an operation in which the cell voltage was set to 1.2 V and held for 4 seconds in the above cell while the anode was left as it was and argon gas was passed through the cathode under the same humidification conditions as above (operation of repetitive square wave voltage fluctuation) was designated as one cycle. After performing this operation of repetitive square wave voltage fluctuation to result in 200 cycles, durability was examined in the same manner as in the above evaluation of power generation characteristics, and the evaluation was made according to the following criteria: passed ranks A and B; and failed rank C. The results are shown in Table 1.

### [Passed Rank]

A+: The output voltage after 200 cycles is 98% or more of the output voltage at the first cycle.
A: The output voltage after 200 cycles is 95% or more of the output voltage at the first cycle.
B: The output voltage after 200 cycles is 90% or more of the output voltage at the first cycle.

### [Failed Rank]

C: Not meeting the passed rank B.

**[Table 1]**

| | Heating temperature | Retention time | BET specific surface area | VA5-10 | VD5-10 | Δ5-10 | V_{macro} | Lc of component A (LcA) | Presence or absence of clear peak at 26.0±0.2 | Branch diameter of three-dimensional dendritic structure | Power generation characteristics | Durability |
|---|---|---|---|---|---|---|---|---|---|---|---|---|
| | °C | h | m2/g | mL/g | mL/g | mL/g | mL/g | nm | | nm | | |
| Example 1 | 2000 | 1 | 1276 | 0.14 | 0.072 | 0.068 | 981 | 0.948 | Present | 59 | A | B |
| Example 2 | 2100 | 1 | 1026 | 0.125 | 0.059 | 0.066 | 530 | 0.952 | Present | 57 | B | A |
| Example 3 | 2200 | 1 | 659 | 0.127 | 0.051 | 0.076 | 756 | 1.079 | Present | 56 | B | A+ |
| Example 4 | 2000 | 1 | 1213 | 0.229 | 0.048 | 0.181 | 1049 | 0.945 | Present | 63 | A+ | B |
| Example 5 | 2200 | 1 | 756 | 0.232 | 0.034 | 0.198 | 924 | 1.023 | Present | 61 | A+ | A+ |
| Example 6 | 2000 | 1 | 1291 | 0.289 | 0.042 | 0.247 | 1158 | 0.941 | Present | 75 | A+ | B |
| Example 7 | 2100 | 1 | 1055 | 0.275 | 0.035 | 0.24 | 1027 | 1.019 | Present | 69 | A+ | A+ |
| Example 8 | 2000 | 1 | 1149 | 0.147 | 0.074 | 0.073 | 472 | 0.993 | Present | 52 | A | A |
| Example 9 | 2200 | 1 | 635 | 0.128 | 0.059 | 0.069 | 353 | 1.181 | Present | 45 | B | A+ |
| Example 10 | 2000 | 1 | 1124 | 0.125 | 0.058 | 0.067 | 385 | 1.011 | Present | 128 | B | A+ |
| Example 11 | 2200 | 1 | 609 | 0.113 | 0.044 | 0.069 | 320 | 1.220 | Present | 115 | B | A+ |
| Comparative Example 1 | 1600 | 1 | 1520 | 0.15 | 0.077 | 0.073 | 1080 | 0.845 | Absent | 63 | A | C |
| Comparative Example 2 | 1800 | 1 | 1456 | 0.15 | 0.074 | 0.076 | 950 | 0.896 | Absent | 65 | A | C |
| Comparative Example 3 | 2400 | 1 | 193 | 0.067 | 0.033 | 0.034 | 440 | 1.412 | Present | 53 | C | A+ |
| Comparative Example 4 | 2600 | 1 | 109 | 0.036 | 0.032 | 0.004 | 410 | 2.485 | Present | 48 | C | A+ |
| Comparative Example 5 | 2000 | 1 | 1182 | 0.088 | 0.053 | 0.035 | 704 | 0.972 | Present | 68 | C | A |
| Comparative Example 6 | 2200 | 1 | 597 | 0.086 | 0.046 | 0.04 | 904 | 1.079 | Present | 65 | C | A+ |
| Comparative Example 7 | 2000 | 1 | 1292 | 0.135 | 0.091 | 0.044 | 488 | 0.872 | Present | 62 | C | C |
| Comparative Example 8 | 2000 | 1 | 1352 | 0.173 | 0.134 | 0.039 | 698 | 0.850 | Present | 62 | C | C |
| Comparative Example 9 | 1600 | 1 | 234 | 0.079 | 0.049 | 0.03 | 1027 | 1.698 | Absent | 32 | C | A+ |
| Comparative Example 10 | 1600 | 1 | 626 | 0.309 | 0.165 | 0.144 | 1280 | 1.285 | Absent | 33 | c | C |
| Comparative Example 11 | 2000 | 1 | 1265 | 0.289 | 0.269 | 0.02 | 72 | 0.990 | Present | Non-dendritic | C | A |
| Comparative Example 12 | 2000 | 1 | 764 | 0.642 | 0.999 | -0.357 | 207 | 1.080 | Present | Non-dendritic | C | A+ |

The above results show that the carbon materials for catalyst carriers of the Examples, which satisfy the requirements of the disclosure, are superior in power generation characteristics and durability to the carbon materials for catalyst carriers of the Comparative Examples, which do not satisfy the requirements of the disclosure.

### Reference Signs List

100 Solid polymer fuel cell
110, 120 Separator
130, 140 Gas diffusion layer
150, 160 Catalyst layer
170 Electrolyte membrane

The disclosure of Japanese Patent Application No. 2023-058262 is incorporated herein by reference in its entirety.

All publications, patent applications, and technical standards described herein are incorporated herein by reference to the same extent as if each individual publication, patent application, or technical standard were specifically and individually indicated to be incorporated by reference.

## Claims

1. A carbon material for a catalyst carrier of a solid polymer fuel cell, comprising a porous carbon material that satisfies the following requirements (A), (B), (C), and (D):
(A) a value of a pore volume VA₅₋₁₀ exhibited by pores having a pore diameter of from 5 nm to less than 10 nm, determined by analyzing a nitrogen adsorption isotherm using a Dollimore-Heal (DH) method, is from 0.1 mL/g to less than 0.3 mL/g;
(B) a difference (VA₅₋₁₀-VD₅₋₁₀) between the pore volume VA₅₋₁₀ exhibited by pores having a pore diameter of from 5 nm to less than 10 nm, determined by analyzing a nitrogen adsorption isotherm using a Dollimore-Heal (DH) method, and a pore volume VD₅₋₁₀ exhibited by pores having a pore diameter of from 5 nm to less than 10 nm, determined by analyzing a nitrogen desorption isotherm using the Dollimore-Heal (DH) method, is 0.06 mL/g or more;
(C) an Lc of a component A having a clear peak between diffraction angles 20 = 26.0 ± 0.2° in an X-ray diffraction (XRD) spectrum obtained by XRD measurement, among those obtained by waveform separation in a range of diffraction angle 20 = from 20° to 30° using a Voigt function into the following three peaks, (LcA) is 0.9 nm or more: Peak A with a diffraction angle 2θ of 25.5° or less; Peak G1 with a diffraction angle 2θ in a range of 26.0° ± 0.2°; and Peak G2 with a diffraction angle 20 in a range of 26.5° ± 0.2°; and
(D) a nitrogen adsorption amount V_{macro}, at a relative pressure of from 0.95 to 0.99 in a nitrogen adsorption isotherm range, is from 300 to 1200 mL/g.

2. The carbon material for a catalyst carrier of a solid polymer fuel cell according to claim 1, further satisfying at least one of the following requirements (E) or (F):
(E) the pore volume VD₅₋₁₀ exhibited by pores having a pore diameter of from 5 nm to less than 10 nm, determined by analyzing a nitrogen desorption isotherm using a Dollimore-Heal (DH) method, is less than 0.08 mL/g; and
(F) the porous carbon material has a three-dimensional dendritic structure, and the three-dimensional dendritic structure has a branch diameter of from 40 to 100 nm.

3. A catalyst layer for a solid polymer fuel cell, comprising the carbon material for a catalyst carrier of a solid polymer fuel cell according to claim 1 or 2.

4. A fuel cell comprising the catalyst layer for a solid polymer fuel cell according to claim 3.

5. The fuel cell according to claim 4, wherein the catalyst layer for a solid polymer fuel cell is a cathode-side catalyst layer.

6. A carbon material for a catalyst carrier of a solid polymer fuel cell, having:
a silver acetylide production step of blowing acetylene gas into a reaction solution comprising an ammoniacal silver nitrate solution, thereby synthesizing silver acetylide;
a decomposition step of drying the silver acetylide and then subjecting the silver acetylide to a self-decomposition explosion reaction by applying a voltage, thereby obtaining a carbon material intermediate;
a washing treatment step of bringing the carbon material intermediate into contact with a nitric acid solution, thereby purifying the carbon material intermediate;
a heat treatment step of heat-treating the purified carbon material intermediate in a vacuum or in an inert gas atmosphere at a temperature of from 1900°C to 2300°C, thereby obtaining a heat-treated carbon material intermediate; and
a pulverization step of pulverizing the heat-treated carbon material intermediate.
